# FASCICULE DE BREVET EUROPEEN

(11) **EP 4 067 236 B1**
(45) Date de publication et mention de la délivrance du brevet: **25.12.2024**
(21) Numéro de dépôt: 22162027.1
(22) Date de dépôt: 15.03.2022
(51) Int. Cl.: B64D 41/00, B64D 27/24, B64D 29/00, B64D 33/08, F02C 7/18

(54) **SYSTEME DE PROPULSION ELECTRIQUE D'UN AERONEF**
ELEKTRISCHES ANTRIEBSSYSTEM FÜR EIN LUFTFAHRZEUG
METHOD FOR ELECTRIC PROPULSION OF AN AIRCRAFT

(30) Priorité: 29.03.2021 FR 2103181
(43) Date de publication de la demande: 05.10.2022
(73) Titulaire: AIRBUS OPERATIONS (S.A.S.), 31060 Toulouse (FR); Airbus (S.A.S.), 31700 Blagnac (FR)
(72) Inventeur: POME, Pascal, 31060 TOULOUSE (FR); ALVAREZ, Franck, 31060 TOULOUSE (FR); LABARTHE, Christophe, 31060 TOULOUSE (FR); CIET, Olivier, 31060 TOULOUSE (FR); ALLIAS, Jean-François, 31060 TOULOUSE (FR); LATOURELLE, Fabien, 31060 TOULOUSE (FR); ROUX, Anthony, 31060 TOULOUSE (FR); RASPATI, Olivier, 31060 TOULOUSE (FR); VERSEUX, Olivier, 31060 TOULOUSE (FR); BAMMER, Benedikt, 86609 DONAUWÖRTH (DE)
(74) Mandataire: Sarraméa, Claude

(56) Documents cités:
- EP-A1- 3 480 114
- WO-A1-2021/115660
- WO-A1-2021/148744
- US-A1- 2020 277 069
- US-A1- 2020 277 076

## Description

L'invention est relative au domaine de la propulsion électrique des aéronefs. Un aéronef à propulsion électrique comporte par exemple des systèmes de propulsion électriques attachés à ses ailes. Un tel système de propulsion électrique comporte généralement une hélice de propulsion entraînée en rotation par un ou des moteur(s) électrique(s) alimenté(s) par un ensemble de piles à combustible (« Fuel Cells » en anglais). Le(s) moteur(s) électrique(s) et les piles à combustible sont par exemple intégrés dans une nacelle. Lors de leur fonctionnement, les piles à combustible dégagent de la chaleur qu'il convient d'évacuer. Pour cela, une solution utilise un circuit de rafraîchissement des piles à combustible, ce circuit comprenant un échangeur de chaleur rafraichi au moyen d'air extérieur à l'aéronef circulant dans un conduit d'air. L'air extérieur à l'aéronef pénètre dans le conduit d'air par des entrées d'air disposées sur une face latérale de la nacelle et il en ressort par des écopes ou des sorties d'air (« exhaust » en anglais) de la nacelle. Le besoin de rafraîchissement des piles à combustible est d'autant plus élevé que la poussée fournie par le système de propulsion est élevée, par exemple lors d'un décollage de l'aéronef. Or, le dimensionnement du circuit de rafraîchissement des piles à combustible doit permettre une évacuation suffisante de la chaleur produite par les piles à combustible dans toutes les phases d'utilisation de l'aéronef, ce qui s'avère complexe, d'autant plus qu'il convient d'éviter de dégrader les performances aérodynamiques de l'aéronef.

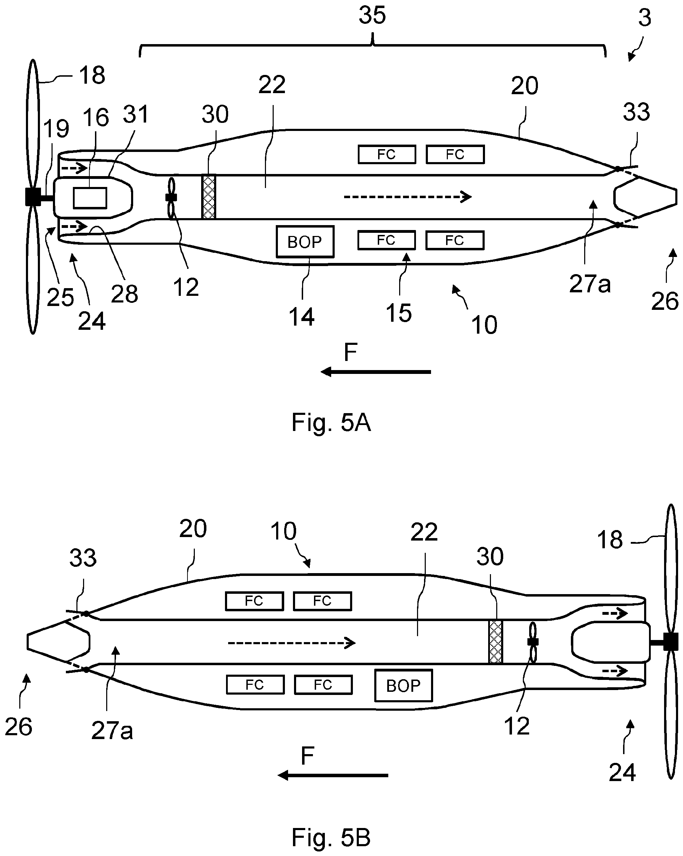

Le document US 2020/277069 A1 décrit une nacelle 26a d'aéronef comprenant un ensemble de piles à combustible 26d prévues pour alimenter électriquement un moteur 26i entrainant une hélice de propulsion. Un canal d'air 26w permet d'une part l'alimentation en oxygène et d'autre part le rafraîchissement des piles à combustible. L'ensemble de piles à combustible peut comporter un échangeur de chaleur pour améliorer le rafraîchissement des piles à combustible. Une ouverture 26x du canal d'air débouche à l'extrémité avant de la nacelle. Comme représenté sur la figure 5, le canal d'air s'étend latéralement le long d'un côté des piles à combustible 26d, depuis l'ouverture 26x située à l'extrémité avant de la nacelle. Une telle configuration n'est pas optimale du point de vue des performances aérodynamiques de la nacelle et par conséquent de l'aéronef.

### EXPOSE DE L'INVENTION :

La présente invention a notamment pour but d'apporter une solution à ce problème. Elle concerne un système de propulsion d'un aéronef comprenant :
- un système de production d'électricité comprenant un ensemble de piles à combustible ;
- au moins un moteur électrique alimenté en électricité par au moins une partie des piles à combustible ;
- une hélice de propulsion couplée mécaniquement à l'au moins un moteur électrique ; et
- une nacelle logeant au moins le système de production d'électricité et l'au moins un moteur électrique, ladite nacelle comprenant un canal de circulation d'air prévu pour permettre le rafraîchissement du système de production d'électricité,
dans lequel :
- le canal de circulation d'air s'étend à l'intérieur de la nacelle à partir d'une première extrémité dudit canal de circulation d'air située à une première extrémité longitudinale de la nacelle ;
- le canal de circulation d'air reçoit un échangeur de chaleur prévu pour permettre le rafraîchissement du système de production d'électricité ; et
- l'hélice de propulsion est située à proximité de la première extrémité longitudinale de la nacelle.

Le système de propulsion est remarquable en ce qu'au moins une partie du canal de circulation d'air contiguë à la première extrémité du canal de circulation d'air est délimitée par une surface extérieure de forme cylindrique entourant l'axe longitudinal de la nacelle, la surface extérieure étant située à l'intérieur de la nacelle.

Le fait que le canal de circulation d'air s'étende à l'intérieur de la nacelle à partir de la première extrémité longitudinale de la nacelle permet la circulation d'un débit d'air élevé dans le canal de circulation d'air, afin de répondre aux besoins de rafraîchissement du système de production d'électricité pour assurer son efficacité. Le fait que l'au moins une partie du canal de circulation d'air contiguë à la première extrémité du canal de circulation d'air soit délimitée par une surface extérieure de forme cylindrique entourant l'axe longitudinal de la nacelle permet une symétrie axiale du système de propulsion. Cela permet de minimiser les effets de blocage aérodynamique et donc la traînée aérodynamique de la nacelle, en optimisant les pertes de charge dues au rafraîchissement du système de production d'électricité. Ainsi, le système de propulsion conforme à l'invention permet de répondre aux besoins de rafraîchissement du système de production d'électricité tout en conservant des caractéristiques satisfaisantes de traînée aérodynamique.

Selon différents modes de réalisation pouvant être pris isolément ou en combinaison :
- dans au moins une partie de la nacelle, considérée selon la longueur de la nacelle, le canal de circulation d'air est unique, de section circulaire et loge un ventilateur prévu pour favoriser la circulation d'air dans ce canal de circulation d'air. De façon préférée, cette section circulaire est centrée sur l'axe longitudinal de la nacelle ;
- le ventilateur est logé dans le canal de circulation d'air, entre la première extrémité du canal de circulation d'air et l'échangeur de chaleur ;
- l'hélice de propulsion est montée rotative autour de la nacelle ;
- le système de propulsion comprend un dispositif de réglage du débit d'air, associé à la première extrémité du canal de circulation d'air ;
- l'hélice de propulsion est montée solidaire d'un arbre d'entraînement dont l'axe longitudinal correspond à l'axe longitudinal de la nacelle ;
- l'échangeur de chaleur est installé dans une partie du canal de circulation d'air dans laquelle une section du canal de circulation d'air par un plan perpendiculaire à l'axe longitudinal de la nacelle est en forme de couronne ;
- l'échangeur de chaleur est installé dans une partie du canal de circulation d'air dans laquelle le canal de circulation d'air est de section circulaire ;
- le canal de circulation d'air est de forme cylindrique et s'étend selon la longueur de la nacelle, entre la première extrémité du canal de circulation d'air et une deuxième extrémité du canal de circulation d'air débouchant à proximité d'une deuxième extrémité longitudinale de la nacelle, opposée à la première extrémité longitudinale de la nacelle ;
- une deuxième extrémité du canal de circulation d'air débouche à travers une paroi latérale de la nacelle, entre la première extrémité longitudinale de la nacelle et une deuxième extrémité longitudinale de la nacelle, opposée à la première extrémité longitudinale de la nacelle ;
- le système de propulsion comporte un réservoir d'hydrogène logé dans la nacelle entre la deuxième extrémité du canal de circulation d'air et la deuxième extrémité longitudinale de la nacelle ;
- le système de propulsion comprend un dispositif de réglage du débit d'air, associé à la deuxième extrémité du canal de circulation d'air ;
- la première extrémité longitudinale de la nacelle correspond à une extrémité longitudinale avant de la nacelle ;
- la première extrémité longitudinale de la nacelle correspond à une extrémité longitudinale arrière de la nacelle ;
- le système de propulsion comprend deux hélices de propulsion montées contrarotatives à proximité l'une de l'autre ;
- outre l'hélice de propulsion, le système de propulsion comprend une hélice montée fixe par rapport à la nacelle, à proximité de l'hélice de propulsion.

L'invention est également relative à un aéronef comprenant un tel système de propulsion.

### DESCRIPTION DETAILLEE :

L'invention sera mieux comprise à la lecture de la description qui suit et à l'examen des figures annexées.
La figure 1 illustre un aéronef équipé d'un système de propulsion conforme à un mode de réalisation de l'invention.
La figure 2A illustre de façon schématique, vu en coupe longitudinale, un système de propulsion d'un aéronef conforme à un premier mode de réalisation de l'invention.
La figure 2B est une vue de détail du système de propulsion d'un aéronef illustré sur la figure 2A.
La figure 2C, similaire à la figure 2B, illustre de façon schématique un mode particulier de réalisation du système de propulsion d'un aéronef conforme au premier mode de réalisation de l'invention.
La figure 2D illustre de façon schématique un système de propulsion d'un aéronef conforme à une variante du premier mode de réalisation de l'invention.
La figure 3A illustre de façon schématique, vu en coupe longitudinale, un système de propulsion d'un aéronef conforme à un deuxième mode de réalisation de l'invention.
La figure 3B illustre de façon schématique un système de propulsion d'un aéronef conforme à une variante du deuxième mode de réalisation de l'invention.
La figure 4A illustre de façon schématique, vu en coupe longitudinale, un système de propulsion d'un aéronef conforme à un troisième mode de réalisation de l'invention.
La figure 4B illustre de façon schématique un système de propulsion d'un aéronef conforme à une variante du troisième mode de réalisation de l'invention.
La figure 5A illustre de façon schématique, vu en coupe longitudinale, un système de propulsion d'un aéronef conforme à un quatrième mode de réalisation de l'invention.
La figure 5B illustre de façon schématique un système de propulsion d'un aéronef conforme à une variante du quatrième mode de réalisation de l'invention.

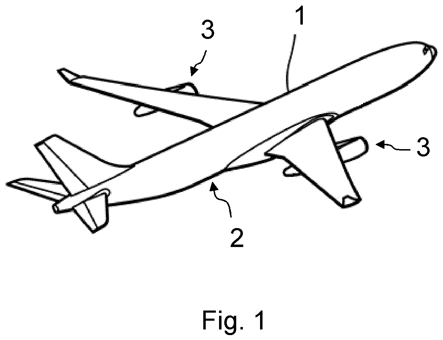

L'aéronef 1 représenté sur la figure 1 comprend un fuselage 2 et des systèmes de propulsion 3. Dans l'exemple illustré sur la figure, les systèmes de propulsion sont fixés sous des ailes de l'aéronef. Toutefois, cette caractéristique n'est pas limitative de l'invention qui couvre aussi d'autres dispositions des systèmes de propulsion, lesquels peuvent en particulier être fixés sur les ailes de l'aéronef, intégrés aux ailes, être fixés au fuselage, etc.

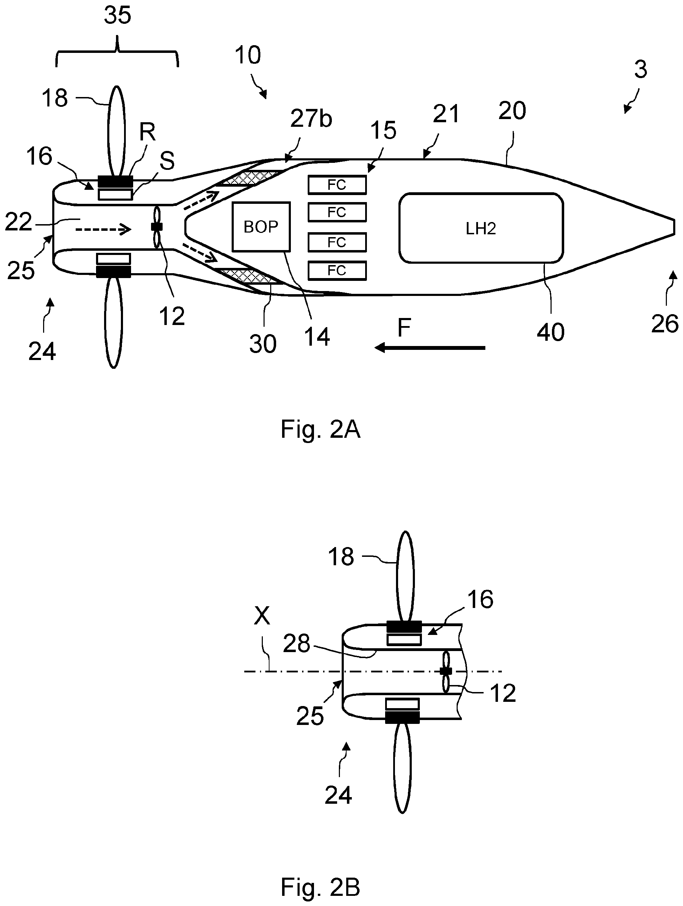

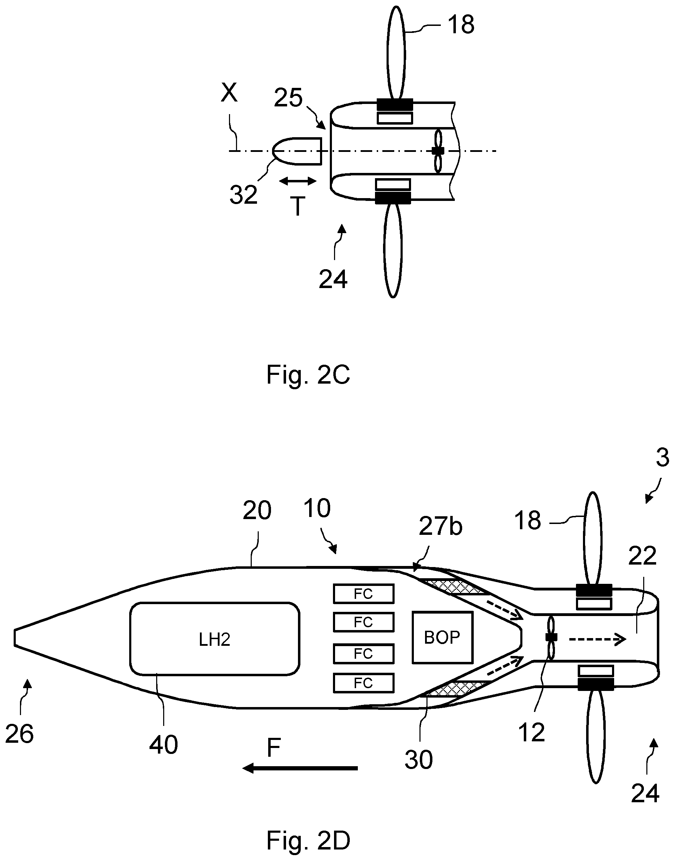

Un système de propulsion 3 d'un aéronef, tel qu'illustré sur les figures 2A à 5B, comprend une nacelle 20 qui loge un système de production d'électricité 10, lequel comprend un ensemble de piles à combustible 15 libellées FC sur la figure (pour « Fuel Cells » en anglais) ainsi qu'un ensemble 14 d'équipements auxiliaires aux piles à combustible, libellé BOP sur la figure (pour « Balance Of Plant » en anglais). La nacelle 20 loge également au moins un moteur électrique 16 alimenté en électricité par au moins une partie des piles à combustible (par des liaisons électriques non représentées sur les figures). La nacelle comprend un canal de circulation d'air 22 prévu pour permettre le rafraîchissement du système de production d'électricité 10. Le canal de circulation d'air reçoit un échangeur de chaleur 30 prévu pour permettre le rafraîchissement du système de production d'électricité 10. Le canal de circulation d'air 22 s'étend à l'intérieur de la nacelle 20 à partir d'une première extrémité 25 dudit canal de circulation d'air située à une première extrémité longitudinale 24 de la nacelle. Au moins une partie du canal de circulation d'air 22, contiguë à la première extrémité 25 du canal de circulation d'air, est délimitée par une surface extérieure 28 de forme cylindrique entourant l'axe longitudinal X de la nacelle 20. Cette forme cylindrique correspond de préférence à un cylindre de base circulaire (cylindre de révolution) ou de base elliptique. Cela permet d'avoir une symétrie de la nacelle 20 par rapport à son axe longitudinal X afin de minimiser la traînée de la nacelle. Le système de propulsion 3 comprend en outre une hélice de propulsion 18 couplée mécaniquement à l'au moins un moteur électrique 16. Cette hélice de propulsion est située à proximité de la première extrémité longitudinale 24 de la nacelle. De façon particulière et non limitative de l'invention, l'hélice de propulsion 18 peut être couplée mécaniquement à l'au moins un moteur électrique 16 par l'intermédiaire d'un réducteur ou d'une boîte de vitesse (« Gear Box » en anglais).

De façon avantageuse, dans au moins une partie 35 de la nacelle, considérée selon la longueur de la nacelle, le canal de circulation d'air 22 est unique, de section circulaire et loge un ventilateur 12 prévu pour favoriser la circulation d'air dans ce canal de circulation d'air. De façon préférée, comme représenté sur les figures, cette section circulaire est centrée sur l'axe longitudinal de la nacelle. De façon particulière, le ventilateur 12 est logé dans le canal de circulation d'air 22, entre la première extrémité 25 du canal de circulation d'air et l'échangeur de chaleur 30.

De façon avantageuse encore, la nacelle 20 loge un réservoir 40 de dihydrogène H2, aussi appelé hydrogène dans la suite de la description. En particulier, l'hydrogène est stocké à l'état liquide dans le réservoir 40, libellé LH2 sur les figures. L'hydrogène contenu dans le réservoir 40 permet d'alimenter en hydrogène les piles à combustible 15. Toutefois, sans sortir du cadre de l'invention, le système de propulsion 3 peut ne pas comprendre un tel réservoir d'hydrogène. Les piles à combustible 15 sont alors alimentées en hydrogène depuis un réservoir d'hydrogène extérieur au système de propulsion 3, par exemple un réservoir d'hydrogène localisé dans le fuselage 2 ou dans une aile de l'aéronef.

Sur les différentes figures, les flèches en trait discontinu illustrent le sens de circulation de l'air dans le canal de circulation d'air 22. Les flèches en trait épais, repérées par le symbole F et parallèles à l'axe longitudinal X de la nacelle 20, illustrent l'orientation de la nacelle 20 lorsqu'elle est installée sur un aéronef 1 : la pointe d'une flèche F indique l'avant de la nacelle (à gauche sur les figures) lorsque l'aéronef est en vol. La longueur de la nacelle s'étend entre sa première extrémité longitudinale 24 et une deuxième extrémité longitudinale 26. Dans la suite de la description, les notions d'avant et d'arrière sont exprimées par rapport au sens d'avancement de l'aéronef 1 lorsque celui-ci est en vol.

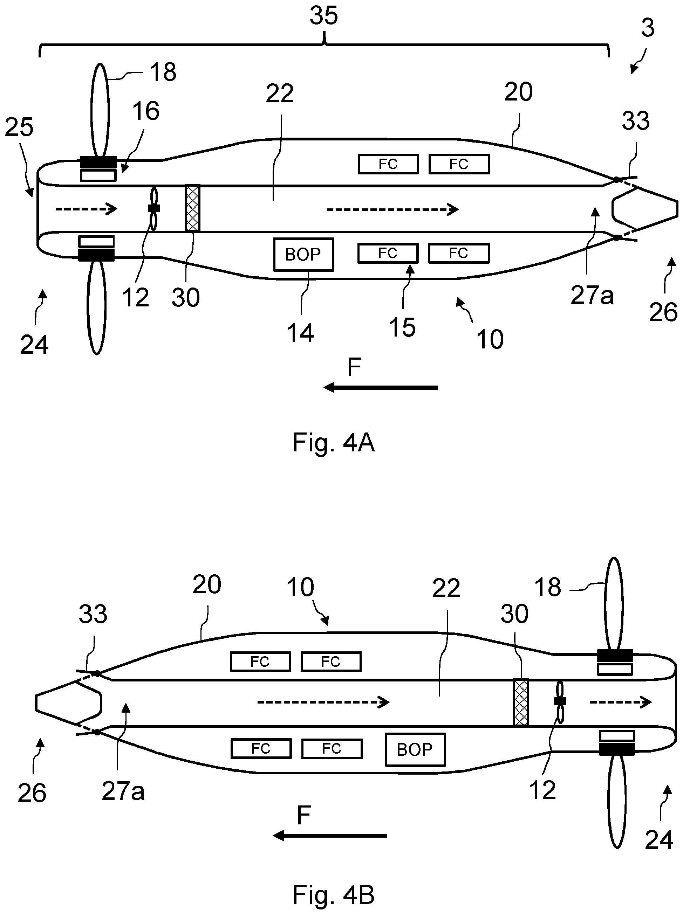

Dans le premier mode de réalisation illustré sur la figure 2A, ainsi que dans le troisième mode de réalisation illustré sur la figure 4A, l'hélice de propulsion 18 est montée rotative autour de la nacelle 20, à proximité de sa première extrémité longitudinale 24. Le moteur électrique (ou un ensemble de moteurs électriques) 16 est disposé en forme de couronne à la périphérie de la nacelle (dans un plan perpendiculaire à l'axe longitudinal X de la nacelle). Un stator S du moteur 16 est solidaire de la nacelle. Des pales de l'hélice de propulsion 18 sont solidaires d'un rotor R prévu pour tourner autour du stator S lors du fonctionnement du moteur 16. Cette disposition de l'hélice de propulsion 18 et du moteur électrique 16 présente l'avantage de ne nécessiter l'intégration d'aucun élément de motorisation à l'intérieur de la première extrémité 25 du canal de circulation d'air 22 qui est ainsi totalement libre pour la circulation de l'air.

Dans une variante non représentée sur la figure, les pales de l'hélice de propulsion sont montées solidaires d'une couronne montée rotative autour de la nacelle. Cette couronne est couplée mécaniquement à l'au moins un moteur 16 par un système d'engrenages.

Dans un mode avantageux de réalisation illustré sur la figure 2C, le système de propulsion 3 comprend un dispositif de réglage du débit d'air 32 associé à la première extrémité 25 du canal de circulation d'air 22. Ce dispositif 32 est prévu pour être déplacé en translation le long de l'axe longitudinal X de la nacelle 20, comme illustré par la flèche bidirectionnelle T. La position du dispositif 32 est contrôlée de façon à optimiser le flux d'air de rafraîchissement dans le canal de circulation d'air 22 en fonction du besoin de rafraîchissement, afin de minimiser le plus possible la traînée aérodynamique de la nacelle. Les liaisons mécaniques entre le dispositif 32 et la nacelle ne sont pas représentées sur la figure. Une translation (vers la droite sur la figure) du dispositif 32 ayant pour effet de le rapprocher de la première extrémité 25 du canal de circulation d'air 22 permet de réduire le débit d'air dans le canal de circulation d'air 22. Une translation (vers la gauche sur la figure) du dispositif 32 ayant pour effet de l'éloigner de la première extrémité 25 du canal de circulation d'air 22 permet d'augmenter le débit d'air dans le canal de circulation d'air 22. Le dispositif de réglage du débit d'air 32 correspond par exemple à un obturateur (« plug » ou « spinner » en anglais) prévu pour obturer partiellement la première extrémité 25 du canal de circulation d'air 22 lorsqu'il est rapproché de ladite extrémité.

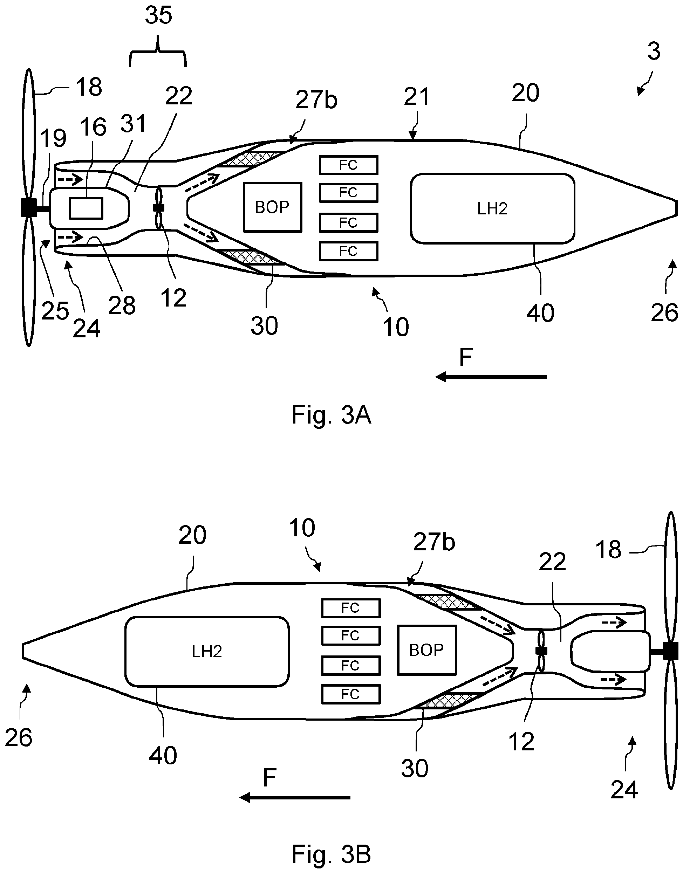

Dans le deuxième mode de réalisation illustré sur la figure 3A, ainsi que dans le quatrième mode de réalisation illustré sur la figure 5A, l'hélice de propulsion 18 est montée solidaire d'un arbre d'entraînement 19 dont l'axe longitudinal correspond à l'axe longitudinal X de la nacelle 20. L'arbre d'entraînement 19 est couplé mécaniquement à l'au moins un moteur électrique 16, lequel est intégré dans un système moteur 31. Dans un mode particulier de réalisation, le système moteur 31 comprend en outre une boîte de vitesses non représentée sur les figures. Lorsque le système de propulsion 3 comprend plusieurs moteurs électriques 16, l'arbre d'entraînement 19 est couplé mécaniquement à ces moteurs électriques par l'intermédiaire de la boîte de vitesses.

Le système moteur 31 est monté au moins en partie à l'intérieur de la nacelle 20, à sa première extrémité 24, centré sur l'axe longitudinal X de la nacelle. Ainsi, la première extrémité 25 du canal de circulation d'air 22 est telle que la surface extérieure 28 du canal de circulation d'air 22, de forme cylindrique, entoure le système moteur 31. De façon avantageuse, le système moteur 31 comporte un carénage prévu pour faciliter l'écoulement de l'air le long dudit système moteur. Lorsque la surface extérieure 28 du canal de circulation d'air 22 est de forme cylindrique circulaire, une section du canal de circulation d'air 22 par un plan perpendiculaire à l'axe longitudinal X de la nacelle est alors en forme de couronne. A sa première extrémité 25, le canal de circulation d'air est alors compris entre sa surface extérieure 28 d'une part et le système moteur 31 d'autre part. Afin de ne pas surcharger les figures, les liaisons mécaniques entre le système moteur 31 et la nacelle ne sont pas représentées. En fonctionnement, la rotation de l'hélice de propulsion 18 favorise l'introduction d'air dans la première extrémité 25 du canal de circulation d'air 22. L'air circule dans le canal de circulation d'air 22, entre la surface extérieure 28 de forme cylindrique et le système moteur 31. L'air arrive ensuite dans la partie 35 du canal de circulation d'air 22 dans laquelle le canal de circulation d'air 22 est unique, de section circulaire et comprend le ventilateur 12. Le ventilateur 12 favorise la circulation de l'air dans le canal de circulation d'air.

Dans le premier mode de réalisation illustré sur la figure 2A, ainsi que dans le deuxième mode de réalisation illustré sur la figure 3A, une deuxième extrémité 27b du canal de circulation d'air 22 débouche à travers une paroi latérale 21 de la nacelle, entre la première extrémité longitudinale 24 de la nacelle et une deuxième extrémité longitudinale 26 de la nacelle, opposée à la première extrémité longitudinale de la nacelle. La deuxième extrémité 27b est par exemple en forme d'écope. L'échangeur de chaleur 30 est installé entre la partie 35 du canal de circulation d'air 22 et sa deuxième extrémité 27b. Selon une première alternative, la deuxième extrémité 27b du canal de circulation d'air 22 s'étend sensiblement sur tout le périmètre de la paroi latérale 21 de la nacelle. L'échangeur de chaleur 30 est alors installé dans une partie du canal de circulation d'air 22 dans laquelle une section du canal de circulation d'air par un plan perpendiculaire à l'axe longitudinal de la nacelle est en forme de couronne. Selon une deuxième alternative, le canal de circulation d'air 22 comprend plusieurs branches indépendantes entre sa partie 35 et sa deuxième extrémité 27b. La deuxième extrémité 27b comprend alors plusieurs parties indépendantes réparties selon le périmètre de la paroi latérale 21 de la nacelle. Les différentes parties indépendantes correspondent chacune à l'une des branches du canal de circulation d'air 22 et elles sont de préférence réparties de façon symétrique sur le périmètre de la paroi latérale 21 de la nacelle. L'échangeur de chaleur 30 comprend alors plusieurs parties disposées dans les différentes branches du canal de circulation d'air 22. Dans une variante, l'échangeur de chaleur 30 est installé dans une partie du canal de circulation d'air dans laquelle le canal de circulation d'air est de section circulaire, par exemple dans la partie 35.

Lorsque la nacelle 20 loge un réservoir 40 d'hydrogène, ce réservoir d'hydrogène est par exemple logé dans une partie de la nacelle comprise entre la deuxième extrémité 27b du canal de circulation d'air 22 et la deuxième extrémité longitudinale 26 de la nacelle. De façon particulière, comme représenté sur les figures 2A et 3A, l'ensemble de piles à combustible 15 ainsi que l'ensemble 14 d'équipements auxiliaires sont aussi logés dans la partie de la nacelle comprise entre la deuxième extrémité 27b du canal de circulation d'air 22 et la deuxième extrémité longitudinale 26 de la nacelle.

De façon particulière et non limitative de l'invention, le système de propulsion 3 comprend un dispositif de réglage du débit d'air, non représenté sur les figures, associé à la deuxième extrémité 27b du canal de circulation d'air 22. Ce dispositif de réglage du débit d'air correspond par exemple à un ensemble de volets dont la position peut être réglée pour faire varier le débit d'air dans le canal de circulation d'air 22, en particulier en fonction du besoin de rafraîchissement du système de production d'électricité 10.

Dans le troisième mode de réalisation illustré sur la figure 4A, le canal de circulation d'air est de forme cylindrique et s'étend selon la longueur de la nacelle, entre la première extrémité 25 du canal de circulation d'air 22 et une deuxième extrémité 27a du canal de circulation d'air débouchant à proximité d'une deuxième extrémité longitudinale 26 de la nacelle, opposée à la première extrémité longitudinale 24 de la nacelle. Lorsque cette forme cylindrique est de section circulaire, la partie 35 du canal de circulation d'air 22 s'étend alors sur la quasi-totalité de la longueur de la nacelle 20. L'échangeur de chaleur 30 est alors de section circulaire. La forme cylindrique du canal de circulation d'air 22 permet de favoriser l'écoulement de l'air dans ce canal de circulation d'air et par conséquent d'améliorer le rafraîchissement du système de production d'électricité 10. De façon avantageuse, le système de propulsion 3 comprend un dispositif 33 de réglage du débit d'air associé à la deuxième extrémité 27a du canal de circulation d'air 22. Ce dispositif 33 de réglage du débit d'air correspond par exemple à un ensemble de volets dont la position peut être réglée pour faire varier le débit d'air dans le canal de circulation d'air 22, en particulier en fonction du besoin de rafraîchissement du système de production d'électricité 10. Les piles à combustible 15 et l'ensemble d'équipements auxiliaires 14 sont logés dans la nacelle autour du canal de circulation d'air 22, entre le canal de circulation d'air 22 et la paroi latérale 21 de la nacelle.

Dans le quatrième mode de réalisation illustré sur la figure 5A, le canal de circulation d'air 22 est similaire à celui du troisième mode de réalisation, excepté en ce qui concerne la première extrémité 25 déjà décrite.

Sur les figures 2A, 3A, 4A et 5A déjà décrites, la première extrémité 24 de la nacelle correspond à l'avant de la nacelle et la deuxième extrémité 26 correspond à l'arrière de la nacelle. L'hélice de propulsion 18 est donc située à proximité de l'avant de la nacelle. En fonctionnement, l'air entre dans le canal de circulation d'air 22 par la première extrémité 25 et il en ressort par la deuxième extrémité 27a ou 27b. L'air ressort par la deuxième extrémité 27a ou 27b après avoir été réchauffé par l'échangeur de chaleur 30, ce qui permet de créer une poussée auxiliaire, additionnelle à la poussée principale produite par l'hélice de propulsion.

Les figures 2B, 3B, 4B et 5B correspondent à des variantes des modes de réalisation illustrés sur les figures 2A, 3A, 4A et 5A, dans lesquelles la première extrémité 24 de la nacelle correspond à l'arrière de la nacelle et la deuxième extrémité 26 correspond à l'avant de la nacelle. L'hélice de propulsion 18 est donc située à proximité de l'arrière de la nacelle. En fonctionnement, l'air entre dans le canal de circulation d'air 22 par la deuxième extrémité 27a ou 27b et il en ressort par la première extrémité 25. L'air ressort par la première extrémité 25 après avoir été réchauffé par l'échangeur de chaleur 30, ce qui permet de créer une poussée auxiliaire, additionnelle à la poussée principale produite par l'hélice de propulsion.

Dans un mode particulier de réalisation, le système de propulsion 3 comprend deux hélices de propulsion montées contrarotatives à proximité l'une de l'autre.

Dans un autre mode de réalisation, outre l'hélice de propulsion 18, le système de propulsion 3 comprend une hélice montée fixe par rapport à la nacelle, à proximité de l'hélice de propulsion.

## Revendications

1. Système de propulsion (3) d'un aéronef (1) comprenant :
- un système de production d'électricité (10) comprenant un ensemble de piles à combustible (15) ;
- au moins un moteur électrique (16) alimenté en électricité par au moins une partie des piles à combustible ;
- une hélice de propulsion (18) couplée mécaniquement à l'au moins un moteur électrique ; et
- une nacelle (20) logeant au moins le système de production d'électricité (10) et l'au moins un moteur électrique (16), ladite nacelle comprenant un canal de circulation d'air (22) prévu pour permettre le rafraîchissement du système de production d'électricité (10),
dans lequel :
- le canal de circulation d'air (22) s'étend à l'intérieur de la nacelle à partir d'une première extrémité (25) dudit canal de circulation d'air située à une première extrémité longitudinale (24) de la nacelle (20) ;
- le canal de circulation d'air reçoit un échangeur de chaleur (30) prévu pour permettre le rafraîchissement du système de production d'électricité (10) ; et
- l'hélice de propulsion (18) est située à proximité de la première extrémité longitudinale (24) de la nacelle,
**caractérisé en ce qu'**au moins une partie du canal de circulation d'air contiguë à la première extrémité du canal de circulation d'air est délimitée par une surface extérieure (28) de forme cylindrique entourant l'axe longitudinal (X) de la nacelle, la surface extérieure (28) étant située à l'intérieur de la nacelle.

2. Système de propulsion selon la revendication 1, **caractérisé en ce que** dans au moins une partie (35) de la nacelle, considérée selon la longueur de la nacelle, le canal de circulation d'air (22) est unique, de section circulaire et loge un ventilateur (12) prévu pour favoriser la circulation d'air dans ce canal de circulation d'air.

3. Système de propulsion selon la revendication 2, **caractérisé en ce que** le ventilateur (12) est logé dans le canal de circulation d'air, entre la première extrémité (25) du canal de circulation d'air et l'échangeur de chaleur (30).

4. Système de propulsion selon l'une des revendications 1 à 3, **caractérisé en ce que** l'hélice de propulsion (18) est montée rotative autour de la nacelle (20).

5. Système de propulsion selon la revendication précédente, **caractérisé en ce qu'**il comprend un dispositif de réglage du débit d'air (32), associé à la première extrémité (25) du canal de circulation d'air.

6. Système de propulsion selon l'une des revendications 1 à 3, **caractérisé en ce que** l'hélice de propulsion (18) est montée solidaire d'un arbre d'entraînement (19) dont l'axe longitudinal correspond à l'axe longitudinal de la nacelle.

7. Système de propulsion selon l'une quelconque des revendications précédentes, **caractérisé en ce que** l'échangeur de chaleur (30) est installé dans une partie du canal de circulation d'air (22) dans laquelle une section du canal de circulation d'air par un plan perpendiculaire à l'axe longitudinal de la nacelle est en forme de couronne.

8. Système de propulsion selon l'une quelconque des revendications 1 à 6, **caractérisé en ce que** l'échangeur de chaleur (30) est installé dans une partie du canal de circulation d'air dans laquelle le canal de circulation d'air est de section circulaire.

9. Système de propulsion selon la revendication précédente, **caractérisé en ce que** le canal de circulation d'air est de forme cylindrique et s'étend selon la longueur de la nacelle, entre la première extrémité (25) du canal de circulation d'air et une deuxième extrémité (27a) du canal de circulation d'air débouchant à proximité d'une deuxième extrémité longitudinale (26) de la nacelle, opposée à la première extrémité longitudinale (24) de la nacelle.

10. Système de propulsion selon l'une quelconque des revendications 1 à 8, **caractérisé en ce qu'**une deuxième extrémité (27b) du canal de circulation d'air (22) débouche à travers une paroi latérale (21) de la nacelle, entre la première extrémité longitudinale (24) de la nacelle et une deuxième extrémité longitudinale (26) de la nacelle, opposée à la première extrémité longitudinale de la nacelle.

11. Système de propulsion selon la revendication précédente, **caractérisé en ce qu'**il comporte un réservoir d'hydrogène (40) logé dans la nacelle entre la deuxième extrémité (27b) du canal de circulation d'air et la deuxième extrémité longitudinale (26) de la nacelle.

12. Système de propulsion selon l'une quelconque des revendications précédentes, **caractérisé en ce qu'**il comprend un dispositif (33) de réglage du débit d'air, associé à la deuxième extrémité (27a, 27b) du canal de circulation d'air (22).

13. Système de propulsion selon l'une quelconque des revendications précédentes, **caractérisé en ce que** la première extrémité longitudinale (24) de la nacelle correspond à une extrémité longitudinale avant de la nacelle.

14. Système de propulsion selon l'une quelconque des revendications 1 à 12, **caractérisé en ce que** la première extrémité longitudinale (24) de la nacelle correspond à une extrémité longitudinale arrière de la nacelle.

15. Aéronef, **caractérisé en ce qu'**il comprend un système de propulsion (3) selon l'une quelconque des revendications précédentes.

## Patentansprüche

1. Antriebssystem (3) für ein Luftfahrzeug (1), beinhaltend:
- ein Stromerzeugungssystem (10), das eine Brennstoffzellenanordnung (15) beinhaltet;
- mindestens einen Elektromotor (16), der von mindestens einem Teil der Brennstoffzellen mit Strom versorgt wird;
- einen Antriebspropeller (18), der mit dem mindestens einen Elektromotor mechanisch gekoppelt ist; und
- eine Gondel (20), die mindestens das Stromerzeugungssystem (10) und den mindestens einen Elektromotor (16) aufnimmt, wobei die Gondel einen Luftzirkulationskanal (22) beinhaltet, der dazu vorgesehen ist, die Kühlung des Stromerzeugungssystems (10) zu ermöglichen,
wobei:
- sich der Luftzirkulationskanal (22) im Inneren der Gondel von einem ersten Ende (25) des Luftzirkulationskanals, das sich an einem ersten Längsende (24) der Gondel (20) befindet, erstreckt;
- der Luftzirkulationskanal einen Wärmetauscher (30) unterbringt, der dazu vorgesehen ist, die Kühlung des Stromerzeugungssystems (10) zu ermöglichen; und
- sich der Antriebspropeller (18) in der Nähe des ersten Längsendes (24) der Gondel befindet,
**dadurch gekennzeichnet, dass** mindestens ein Teil des Luftzirkulationskanals, der an das erste Ende des Luftzirkulationskanals angrenzt, von einer zylindrischen Außenfläche (28) begrenzt wird, die die Längsachse (X) der Gondel umgibt, wobei sich die Außenfläche (28) im Inneren der Gondel befindet.

2. Antriebssystem nach Anspruch 1, **dadurch gekennzeichnet, dass**, gemäß der Länge der Gondel betrachtet, in mindestens einem Teil (35) der Gondel der Luftzirkulationskanal (22) einfach ausgeführt ist, einen kreisförmigen Querschnitt aufweist und einen Lüfter (12) aufnimmt, der dazu vorgesehen ist, die Luftzirkulation in diesem Luftzirkulationskanal zu unterstützen.

3. Antriebssystem nach Anspruch 2, **dadurch gekennzeichnet, dass** der Lüfter (12) in dem Luftzirkulationskanal zwischen dem ersten Ende (25) des Luftzirkulationskanals und dem Wärmetauscher (30) aufgenommen ist.

4. Antriebssystem nach einem der Ansprüche 1 bis 3, **dadurch gekennzeichnet, dass** der Antriebspropeller (18) drehbar um die Gondel (20) montiert ist.

5. Antriebssystem nach dem vorhergehenden Anspruch, **dadurch gekennzeichnet, dass** es eine Vorrichtung zur Regelung des Luftdurchsatzes (32) beinhaltet, die mit dem ersten Ende (25) des Luftzirkulationskanals assoziiert ist.

6. Antriebssystem nach einem der Ansprüche 1 bis 3, **dadurch gekennzeichnet, dass** der Antriebspropeller (18) fest an einer Antriebswelle (19) montiert ist, deren Längsachse der Längsachse der Gondel entspricht.

7. Antriebssystem nach einem der vorhergehenden Ansprüche, **dadurch gekennzeichnet, dass** der Wärmetauscher (30) in einem Teil des Luftzirkulationskanals (22) installiert ist, in dem ein Querschnitt des Luftzirkulationskanals in einer zu der Längsachse der Gondel senkrechten Ebene kranzförmig ist.

8. Antriebssystem nach einem der Ansprüche 1 bis 6, **dadurch gekennzeichnet, dass** der Wärmetauscher (30) in einem Teil des Luftzirkulationskanals installiert ist, in dem der Luftzirkulationskanal einen kreisförmigen Querschnitt aufweist.

9. Antriebssystem nach dem vorhergehenden Anspruch, **dadurch gekennzeichnet, dass** der Luftzirkulationskanal zylindrisch ist und sich gemäß der Länge der Gondel zwischen dem ersten Ende (25) des Luftzirkulationskanals und einem zweiten Ende (27a) des Luftzirkulationskanals erstreckt und dabei in der Nähe eines zweiten Längsendes (26) der Gondel, das zu dem ersten Längsende (24) der Gondel entgegengesetzt ist, mündet.

10. Antriebssystem nach einem der Ansprüche 1 bis 8, **dadurch gekennzeichnet, dass** ein zweites Ende (27b) des Luftzirkulationskanals (22) zwischen dem ersten Längsende (24) der Gondel und einem zweiten Längsende (26) der Gondel, das zu dem ersten Längsende der Gondel entgegengesetzt ist, durch eine Seitenwand (21) der Gondel mündet.

11. Antriebssystem nach dem vorhergehenden Anspruch, **dadurch gekennzeichnet, dass** es einen Wasserstofftank (40) umfasst, der in der Gondel zwischen dem zweiten Ende (27b) des Luftzirkulationskanals und dem zweiten Längsende (26) der Gondel aufgenommen ist.

12. Antriebssystem nach einem der vorhergehenden Ansprüche, **dadurch gekennzeichnet, dass** es eine Vorrichtung (33) zur Regelung des Luftdurchsatzes beinhaltet, die mit dem zweiten Ende (27a, 27b) des Luftzirkulationskanals (22) assoziiert ist.

13. Antriebssystem nach einem der vorhergehenden Ansprüche, **dadurch gekennzeichnet, dass** das erste Längsende (24) der Gondel einem vorderen Längsende der Gondel entspricht.

14. Antriebssystem nach einem der Ansprüche 1 bis 12, **dadurch gekennzeichnet, dass** das erste Längsende (24) der Gondel einem hinteren Längsende der Gondel entspricht.

15. Luftfahrzeug, **dadurch gekennzeichnet, dass** es ein Antriebssystem (3) nach einem der vorhergehenden Ansprüche beinhaltet.

## Claims

1. Propulsion system (3) of an aircraft (1), comprising:
- a system for producing electricity (10) comprising a set of fuel cells (15);
- at least one electric motor (16) supplied with electricity by at least some of the fuel cells;
- a propeller (18) mechanically coupled to the at least one electric motor; and
- a nacelle (20) housing at least the system for producing electricity (10) and the at least one electric motor (16), said nacelle comprising an air circulation channel (22) provided to allow the system for producing electricity (10) to be cooled,
wherein:
- the air circulation channel (22) extends inside the nacelle from a first end (25) of said air circulation channel that is situated at a first longitudinal end (24) of the nacelle (20);
- the air circulation channel receives a heat exchanger (30) provided to allow the system for producing electricity (10) to be cooled; and
- the propeller (18) is situated near the first longitudinal end (24) of the nacelle,
**characterized in that** at least a part of the air circulation channel that is contiguous with the first end of the air circulation channel is delimited by an outer surface (28) of cylindrical shape that surrounds the longitudinal axis (X) of the nacelle, the outer surface (28) being situated inside the nacelle.

2. Propulsion system according to Claim 1, **characterized in that** in at least a part (35) of the nacelle, considered along the length of the nacelle, there is only one air circulation channel (22), which is of circular section and houses a fan (12) provided to promote the circulation of air in this air circulation channel.

3. Propulsion system according to Claim 2, **characterized in that** the fan (12) is housed in the air circulation channel, between the first end (25) of the air circulation channel and the heat exchanger (30).

4. Propulsion system according to one of Claims 1 to 3, **characterized in that** the propeller (18) is mounted so as to be able to rotate about the nacelle (20).

5. Propulsion system according to the preceding claim, **characterized in that** it comprises a device for adjusting the air flow rate (32), which is associated with the first end (25) of the air circulation channel.

6. Propulsion system according to one of Claims 1 to 3, **characterized in that** the propeller (18) is mounted secured to a drive shaft (19), of which the longitudinal axis corresponds to the longitudinal axis of the nacelle.

7. Propulsion system according to any one of the preceding claims, **characterized in that** the heat exchanger (30) is installed in a part of the air circulation channel (22), in which a section of the air circulation channel on a plane perpendicular to the longitudinal axis of the nacelle is in the shape of a ring.

8. Propulsion system according to any one of Claims 1 to 6, **characterized in that** the heat exchanger (30) is installed in a part of the air circulation channel, in which the air circulation channel is of circular section.

9. Propulsion system according to the preceding claim, **characterized in that** the air circulation channel is of cylindrical shape and extends along the length of the nacelle, between the first end (25) of the air circulation channel and a second end (27a) of the air circulation channel that opens near a second longitudinal end (26) of the nacelle, which is opposite the first longitudinal end (24) of the nacelle.

10. Propulsion system according to any one of Claims 1 to 8, **characterized in that** a second end (27b) of the air circulation channel (22) opens through a lateral wall (21) of the nacelle, between the first longitudinal end (24) of the nacelle and a second longitudinal end (26) of the nacelle, which is opposite the first longitudinal end of the nacelle.

11. Propulsion system according to the preceding claim, **characterized in that** it has a hydrogen reservoir (40) housed in the nacelle between the second end (27b) of the air circulation channel and the second longitudinal end (26) of the nacelle.

12. Propulsion system according to any one of the preceding claims, **characterized in that** it comprises a device (33) for adjusting the air flow rate, which is associated with the second end (27a, 27b) of the air circulation channel (22).

13. Propulsion system according to any one of the preceding claims, **characterized in that** the first longitudinal end (24) of the nacelle corresponds to a front longitudinal end of the nacelle.

14. Propulsion system according to any one of Claims 1 to 12, **characterized in that** the first longitudinal end (24) of the nacelle corresponds to a rear longitudinal end of the nacelle.

15. Aircraft, **characterized in that** it comprises a propulsion system (3) according to any one of the preceding claims.
